# EUROPEAN PATENT SPECIFICATION

(11) **EP 1 473 201 B1**
(45) Date of publication and mention of the grant of the patent: **14.06.2017**
(21) Application number: 03703157.2
(22) Date of filing: 04.02.2003
(51) Int. Cl.: B60R 21/26, F42B 3/12

(54) **Current supply circuit for generating ignition pulses of 20 to 500 microseconds for use in air bag systems**
Stromversorgungskreis zur Erzeugung von Zündimpulsen von 20 bis 500 Mikrosekunden zur Anwendung in Insassenschutzsystemen
Circuit d'alimentation électrique pour générer des impulsions d'amorçage de 20 à 500 microsecondes à être utilisé dans des systèmes de coussins gonflables

(30) Priority: 04.02.2002 JP 2002026776
(43) Date of publication of application: 03.11.2004
(73) Proprietor: Daicel Chemical Industries, Ltd., Kita-ku, Osaka-shi Osaka 530-0001 (JP)
(72) Inventor: OKAMOTO, Mitsuyasu, Hyogo, 671-1523 (JP); ODA, Shingo, Himeji-shi, Hyogo 671-1224 (JP)
(74) Representative: Grünecker Patent- und Rechtsanwälte PartG mbB
(86) International application number: PCT/JP2003/001121
(87) International publication number: WO 2003/066389

(56) References cited:
- EP-A1- 0 615 887
- WO-A1-01/46638
- WO-A1-98/10236
- WO-A1-99/24293
- JP-A- 8 188 114
- JP-A- 11 048 908
- JP-A- 11 310 102

## Description

### Technical Field to which the Invention belongs

The present invention relates to a current supplying circuit which supplies an electric current for actuating an igniter at a time of actuation of an air bag gas generator, an air bag system using the current supplying circuit and a method of actuating an igniter.

### Prior Art

An air bag system for protecting a passenger from an impact at a time of collision of a vehicle is indispensable, and the air bag system needs to be reduced in weight from a demand for reducing weight of a whole vehicle.

An example of an air bag system can be found in EP 0615 887. Recently, kinds and the total number of air bags such as an air bag for a driver side, an air bag for a passenger side next to the driver, an air bag for a rear seat side, and an air bag for an side impact are increasing, and therefore, a lighter air bag system is in greater demand.

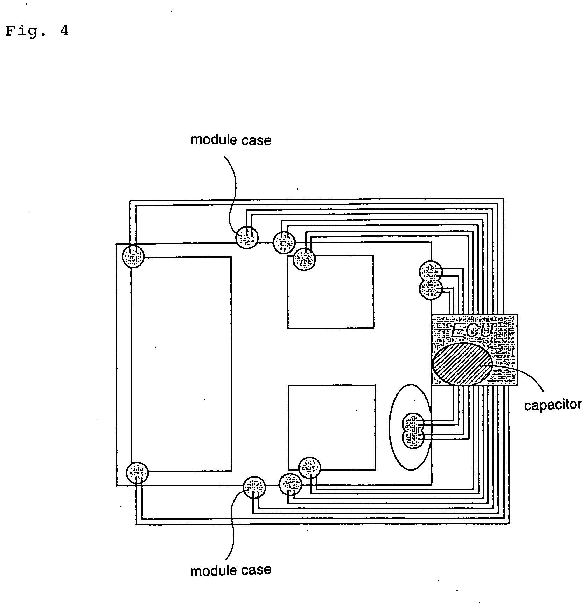

In a current air bag system, an electronic control unit (ECU) connected to a power source (a battery in a vehicle) and an impact detecting sensor are individually connected to individual gas generators (a gas generator and an air bag are accommodated in a module case). An aspect of the connection between the ECU and the individual gas generators is shown in Fig. 4.

As shown in Fig. 4, the ECU and each module case are connected to each other through two conducting wires (lead wires), and an electric current at a time of actuation of an igniter is supplied from a battery. When any one of the lead wires connecting the battery and the ECU at a time of vehicle collision is broken, a gas generator is not actuated. In order to avoid such a situation, a capacitor for backup power source is incorporated into the ECU. However, this capacitor has to actuate all igniters, and therefore, the capacitor is obligated to have a large capacitance (namely, weight), which makes the ECU so large.

### Disclosure of the Invention

An object of the present invention is to provide a current supplying circuit in which a capacitance of a capacitor for backup power source provided in an ECU is reduced and that contributes weight reduction of an entire air bag system, an air bag system using the current supplying circuit, and a method for actuating an igniter.

This is achieved by the features of the independent claims.

In order to reduce a total amount of an electric current stored in the capacitor, which is an essential condition to reduce a capacitance of the capacitor for backup power source provided in an ECU, the present inventors started studying in view of reducing an amount of ignition energy required for actuating individual igniters.

In order to inflate an air bag wi thin a required period at a time of vehicle collision, a heat generating portion of the igniter has to generate a heat instantaneously to securely ignite and burn a priming in contact with the heat generating portion. Considering an ignition energy (µJ) required for heat generation at the heat generating portion, the inventors repeatedly made a study about a relationship between a pulse width (µsec) of the current supplied to the heat generating portion and an amount of ignition energy. As a result, the inventors found that the priming can be ignited and burnt with ignition energy of about 1000 µJ, provided that the resistance value of the heat generating portion is 2 Ω and the priming is a mixture (ZPP) of zirconium and potassium perchlorate, or a mixture of another priming such as hafnium hydride or titanium hydride and potassium perchlorate. They further found the range of pulse width of the current imparting the ignition energy, and completed the present invention.
Fig. 1 is a conceptual diagram of a current supplying circuit;
Fig. 2 is a graph for explaining an advantage of the current supplying circuit;
Fig. 3 is a vertical sectional view of an igniter;
Fig. 4 is a diagram of an air bag system;
Fig. 5 is a sectional view of a single type gas generator in the radial direction;
Fig. 6 is a sectional view of a dual type gas generator in the radial direction; and
Fig. 7 is a conceptual diagram of a test circuit used in Experimental Example 1.

### (1) First Embodiment

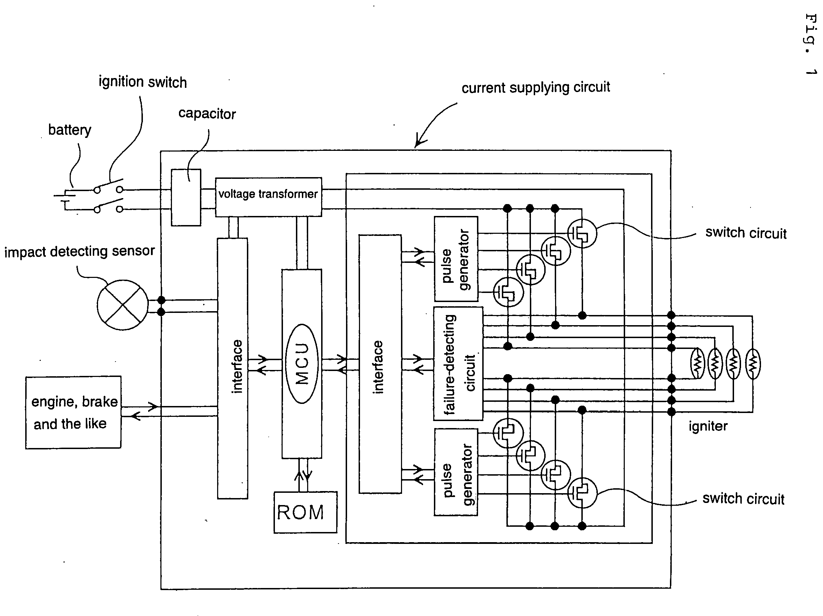

An embodiment of the present invention will be explained below with reference to the drawings. Fig. 1 is a conceptual diagram of a current supplying circuit of the present invention, and the current supplying circuit is provided in an ECU.

A current supplying circuit is constituted by arranging respective elements of at least a switch circuit, a pulse generator, a disconnection detecting circuit, a voltage transformer, a capacitor and the like on a substrate, and it is provided in a midway of a current path connecting a battery which is an external power source and igniters incorporated into gas generators. Two current paths are provided for each igniter and formed by two conducting wires (lead wires).

The switch circuit which opens or closes the current path and blocks a current when it is unnecessary to actuate an igniter to start supplying a current at a time of actuation of the igniter is provided in the current supplying circuit, and one switch circuit is provided for each current path (for each one lead wire). When the switch circuit is opened, a current never flows into the current path.

The switch circuit and the pulse generator are connected by conductors, and the switch circuit is opened or closed by sending a controlling pulse instructing to open or close the switch circuit from the pulse generator. A command for transmitting a controlling pulse to the pulse generator is sent from an MCU upon receipt of an instruction from an impact detecting sensor.

The switch circuit is formed of a thyristor, a MOS-FET, a bipolar transistor or the like. It is desirable, in view of preventing an erroneous operation, that the switch circuits is provided on each of positive and negative sides of the current path, as shown in Fig. 1, but it may be provided on only the positive side. For example, when that a current pulse with a waveform width of 100 µsec is applied from the pulse generator, the switch is closed for 100 µsec so that a current from the voltage transformer flows to a heat generating portion of the igniter as a pulse with a width of 100 µsec. By applying a pulse with a predetermined time-width to the heat generating portion of the igniter in this manner, heat is generated at the heat generating portion to ignite and burn a priming.

The disconnection detecting circuit is for detecting abnormality of an igniter (abnormality of the heat generating portion of the igniter), and it is connected with the current path, but a switch circuit is not provided between the disconnection detecting circuit and the current path. For this reason, when the igniter is not being actuated (when a vehicle is running normally), a weak electric current for detecting disconnection is always flowing from the disconnection detecting circuit, so that abnormality of the igniter can be detected promptly and such abnormality is notified by an alarm lamp actuated in a linkage manner, which allows early exchange of parts.

The capacitor is for storing a current supplied from the battery and supplying an electric current instead of the battery when supplying the current from the battery is interrupted. Therefore, the capacitor is connected to all elements within the current supplying circuit directly or indirectly through conductors. The capacitor is provided in a midway of the current path from the battery to the current supplying circuit, but a current is sent to the current supplying circuit by only the battery unless a disconnection occurs between the battery and the ECU.

The voltage transformer is for performing voltage transformation for an interface or an MCU, a ROM is for storing patterns of signals required for actuating each air bag system, and the interface is for optimizing external signals in order to transmit them to the MCU, the pulse generator and the disconnection detecting circuit.

Next, operation of the current supplying circuit will be explained. When a vehicle is running normally, a capacitor stores therein a current required as a backup power source of a current supplied from the battery. Then, a test current (weak current) for detecting disconnection flows from the disconnection detecting circuit, so that abnormality of the igniter (a loose contact between the heat generating portion and the priming of the igniter, or a disconnection of the heat generating portion) is detected.

As one of conditions required for the gas generator to activate normally, a contacting state between the heat generating portion of the igniter and the priming has to be good (the heat generating portion and the priming has to be brought in press-contact with each other). For example, when there is a gap between the heat generating portion and the priming, it is considered that there occurs a malfunction such that the priming is not ignited when the igniter is actuated or an ignition is delayed. Further, when the heat generating portion is disconnected or have been half-disconnected, a similar malfunction occurs. For this reason, by recording information for detecting the malfunction in the integrated circuit, an inferior product can be removed at a time of shipping, and by detecting abnormality at a practical use (while driving a vehicle), a prompt exchange can be performed.

When a vehicle collides, an instruction from the impact detecting sensor is transmitted to the ECU, and an instruction for closing the switch circuit is transmitted to the pulse generator via the MCU. When transmission of the instruction is received, a current from the battery is sent to the igniter via the current path as an ignition pulse for actuating the igniter (the width is 20 to 500 µsec, preferably 30 to 200 µsec and more preferably 40 to 100 µsec) while a controlling pulse is flowing into the switch circuit from the pulse generator. Upon receipt of the ignition pulse, the heat generating portion of the igniter generates heat, so that the priming coming in contact with the heat generating portion is ignited.

Next, a relationship between the ignition pulse width (µsec) and the ignition energy (µJ) when the current supplying circuit was used will be explained with Experimental Examples.

### Experimental Example 1

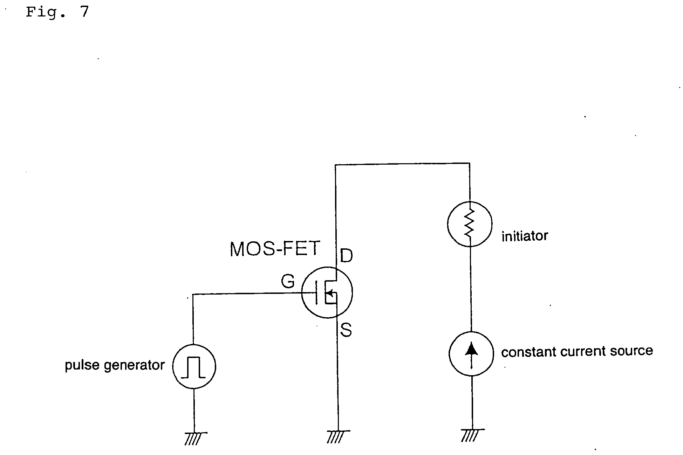

A test circuit shown in Fig. 7 was used as the current supplying circuit, and it was recorded such that each switch circuit was supplied with currents supplied from the power source, being adjusted to have ignition pulses with widths of 15 µsec, 40 µsec, 100 µsec and 2000 µsec.

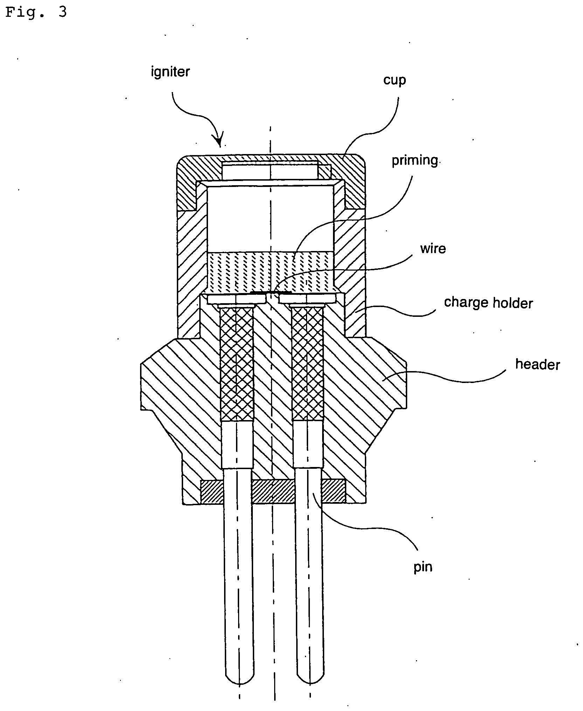

A general igniter shown in Fig. 3 was used as the igniter. In the igniter, the heat generating portion was constituted by connecting a metal thin wire, which was a resistance heat generating body (resistance = 2 Ω), between electrodes by a resistance-welding, ZPP of 60 mg was used as the priming, and the heat generating portion and ZPP were maintained in a cup such that they were press-contacted with each other. The igniter were connected to conducting wires at two pin portions, and it was connected to a direct-current source via the current supplying circuit shown in Fig. 7.

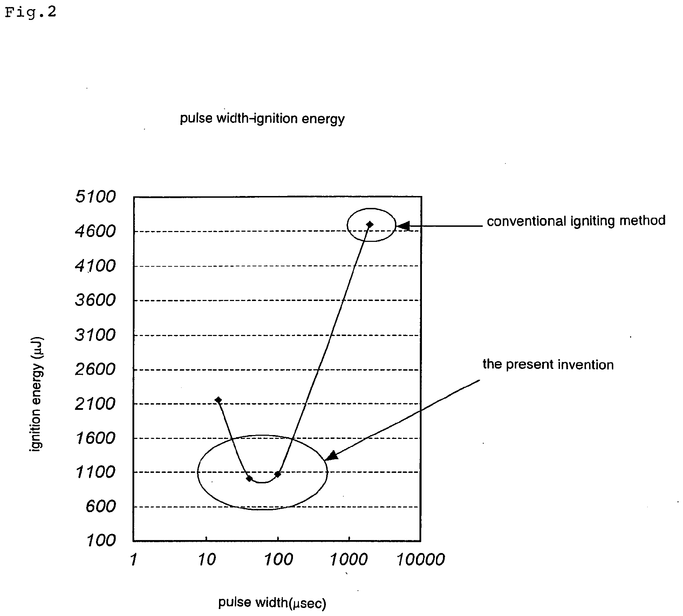

Under these experimental conditions, the combustion state of the priming when a current was supplied from the direct-current source to supply a predetermined width of ignition pulses (µsec) was observed. The measurement results are shown in Fig. 2.

Fig. 2 shows a relationship between a pulse width (µsec) of an ignition pulse and ignition energy (µJ), and respective points are 15 µsec, 40 µsec, 100 µsec and 2000 µsec in an ascending order. Incidentally, the ignition energy can be obtained from the following formula: E = I²Rt [I denotes a current (A) (an ignition current having a reliability of 99.9999%), R denotes a resistance (Ω), t denotes a pulse width (µsec)). In case that R(Ω) was made constant and the pulse width (t) was set to 15 µsec, 40 µsec, 100 µsec and 2000 µsec, test was repeated about whether or not the priming was normally actuated when the current (I) was changed, so that the minimum ignition energy (E) was obtained when the priming was normally ignited.

The minimum ignition energies at all the pulse widths of 15 µsec, 40 µsec, 100 µsec and 2000 µsec are shown in Fig. 2, from which it was confirmed that the priming could sufficiently be ignited and burnt even in a pulse width in the range of 40 to 100 µsec, which corresponded to the ignition energy of about 1000 µJ. The ignition energy obtained in the pulse width in the range of 40 to 100 µsec was reduced down to 1/5 of the ignition energy obtained at the conventional pulse width of 2000 µsec (2 msec).

By setting the ignition pulse width to a predetermined range with such a current supplying circuit, an amount of a current (an amount of ignition energy) required for actuating individual igniters normally can be reduced, so that an amount of current (an amount of ignition energy) required actuating all the igniters normally can also be reduced. As a result, the capacitance (namely weight) of the capacitor for a backup power source can also be made smaller and the ECU itself can be made compact.

The current supplying circuit of the present invention can be applied to various inflators (gas generators) such as an inflator for an air bag for a driver side, an inflator for an air bag for a passenger side next to the driver, an inflator for a side air bag, an inflator for a curtain air bag, and an inflator for a knee-bolster air bag, an inflator for an inflatable seat belt, an inflator for a tubular system, and an inflator for a pretensioner.

### (2) Second Embodiment

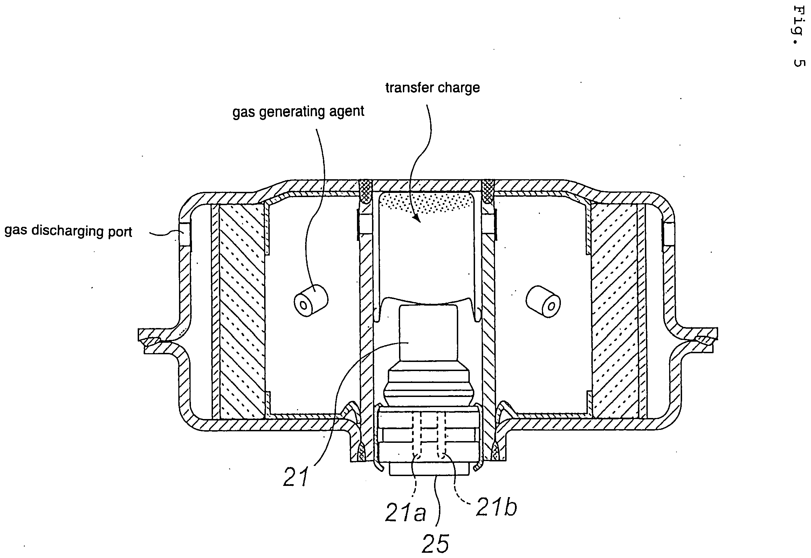

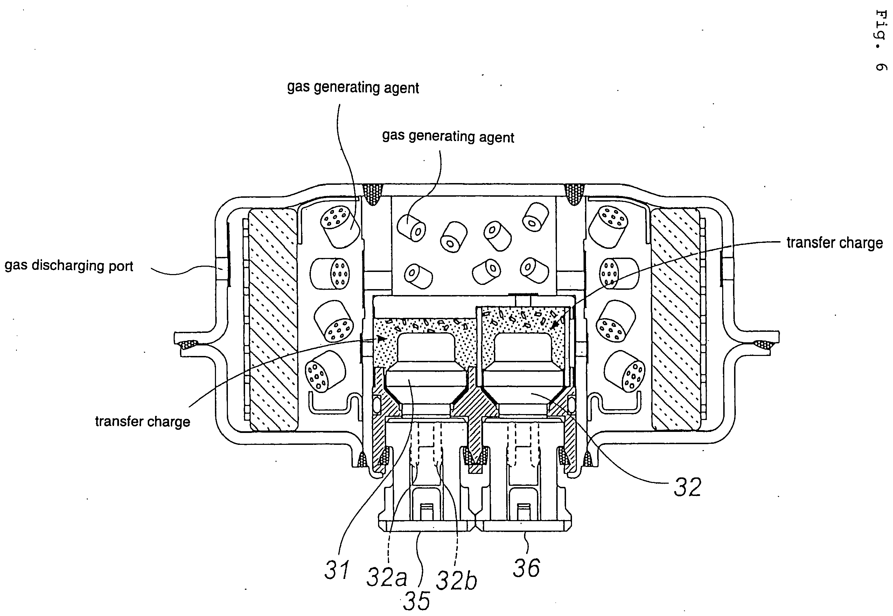

Next, an embodiment of an air bag system of the present invention using the above-described current supplying circuit will be explained with reference to Fig. 1 to Fig. 6. Fig. 5 and Fig. 6 are sectional views of general gas generators in the radial direction, Fig. 5 showing a gas generator of a single type having a single igniter, and Fig. 6 showing a gas generator of a dual type having two igniter.

As shown in Fig. 4, an air bag system mounted in a vehicle comprises an ECU connected to a power source (a battery) and an impact detecting sensor, and plural module cases accommodating plural gas generators and air bags, which is connected to the ECU, wherein each of the ECU and individual gas generators is connected separately by conductors, and the current supplying circuit as shown in Fig. 1 is provided in the ECU.

As the gas generator accommodated in the module case, one of the single type shown in Fig. 5 or one of the dual type shown in Fig. 6 can be used, and as an igniter incorporated into the gas generator, one shown in Fig. 3 can be used.

In the current supplying circuit shown in Fig. 1, four igniters are shown, where four gas generators of the single type, two gas generators of the dual type, or a combination of gas generators of the single type and the dual type can be used.

Next, an operation of the air bag system of the present invention will be explained with reference to Fig. 1 to Fig. 6. When a vehicle is running normally, a weak current for disconnection detecting of the heat generating portion flows to the igniters of the gas generators from the current supplying circuit to detect abnormality in the igniters. If abnormality is detected, the abnormality is announced by an alarm lamp actuated in linkage with the air bag system or the like so that an early exchange of parts can be made and a safety can therefore be ensured. Further, charging of the capacitor in the current supplying circuit from the power source can be made.

When the vehicle mounted with the air bag system collides, information from the impact detecting sensor is transmitted to the current supplying circuit in the ECU, a controlling pulse is transmitted from the pulse generator upon receipt of this information, and the switch circuit is actuated. A current is supplied as an ignition pulse for actuating the igniter due to the actuation of the switch circuit, the width of the ignition pulse is adjusted to 20 to 500 µsec so that required ignition energy is supplied to the heat generating portion of the igniter, and the priming is ignited and burnt.

According to ignition and combustion of the priming, a transfer charge in the gas generator shown in Fig. 5 or Fig. 6, and further the gas generating agent is ignited and burnt to generate a gas. The generated gas is discharged from gas discharging ports to inflate an air bag accommodated in the module case together with the gas generator.

By using such an air bag system, an amount of a current (an amount of ignition energy) required for actuating individual igniters normally is reduced, so that an amount of a current (an amount of ignition energy) required for actuating all the igniters normally can also be reduced. Thereby, the capacitance (weight) of the capacitor for a backup power source can also be made smaller and the ECU itself can be made compact. For this reason, the weight of the whole air bag system can be reduced.

The air bag system of the present invention can be applied to various inflators (gas generators) such as an inflator for an air bag for a driver side, an inflator for an air bag for a passenger side next to the driver, an inflator for a side air bag, an inflator for a curtain air bag, and an inflator for a knee-bolster air bag, an inflator for an inflatable seat belt, an inflator for a tubular system, and an inflator for a pretensioner.

## Claims

1. A current supplying circuit for suppliying an ignition pulse to actuate an electric igniter arranged in a gas generator at a time of actuation of the air bag gas generator, comprising:
a first connector for connecting the current supplying circuit to an external power source; and
a second connector for connecting the current supplying circuit to the electric igniter;
**characterized in that**
the width of the ignition pulse is 20 to 500 µsec.

2. The current supplying circuit according to claim 1, wherein the width of the ignition pulse is 40 to 100 µsec.

3. The current supplying circuit according to claim 1 or 2 further comprising
a switch circuit for opening or closing a current path for actuating the igniter, the switch circuit provided between the current path and an external power source,
a pulse generator for providing a controlling pulse for opening or closing the switch circuit.

4. The current supplying circuit according to claim 3, wherein the switch circuit is a thyristor, a MOS-FET or a bipolar transistor.

5. The current supplying circuit according to claim 3 or 4, wherein the switch circuit is provided on each side of positive and negative sides of the current path.

6. The current supplying circuit according to any of claims 3 to 5 further comprising
a disconnection detecting circuit for detecting a disconnection of the current path, wherein
the switch circuit is not interposed between the current path and the disconnection detecting circuit.

7. The current supplying circuit according to any of claims 1 to 6 further comprising
a voltage transformer; and
a capacitor storing electric energy supplied from an external power source to supply a current instead of the external power source when supplying a current from the external power source is blocked.

8. An air bag system comprising
an electronic control unit connected to a power source and an impact detecting sensor; and
plural module cases connected to the electronic control unit and accommodating plural gas generators and plural air bags, each of the electronic control unit and individual gas generators being connected separately by conductors, wherein
the electronic control unit comprises the current supplying circuit according to any one of claims 1 to 7.

9. A method for supplying an ignition pulse to actuate an electric igniter arranged in a gas generator for an air bag, the method comprising the steps of
obtaining a current from an external power source; and
supplying an ignition pulse for actuating the electric igniter;
**characterized in that**
the width of the ignition pulse is 20 to 500 µsec.

10. The method for actuating an igniter according to claim 9, wherein the the width of the ignition pulse is 40 to 100 µsec.

## Patentansprüche

1. Stromversorgungskreis zur Zufuhr eines Zündimpulses zum Betätigen eines in einem Gasgenerator angeordneten elektrischen Zünders zum Zeitpunkt der Aktivierung des Airbag-Gasgenerators, umfassend:
einen ersten Verbinder zum Verbinden des Stromversorgungskreises mit einer externen Spannungsquelle; und
einen zweiten Verbinder zum Verbinden des Stromversorgungskreises mit dem elektrischen Zünder;
**dadurch gekennzeichnet, dass**
die Breite des Zündimpulses 20 bis 500 µsec beträgt.

2. Stromversorgungskreis nach Anspruch 1, wobei die Breite des Zündimpulses 40 bis 100 µsec beträgt.

3. Stromversorgungskreis nach Anspruch 1 oder 2, der des Weiteren umfasst:
einen Schalterschaltkreis zum Öffnen oder Schließen eines Strompfads zur Betätigung des Zünders, wobei der Schalterschaltkreis zwischen dem Strompfad und einer externen Spannungsquelle bereitgestellt wird,
einen Impulsgenerator zur Bereitstellung eines Steuerimpulses zum Öffnen oder Schließen des Schalterschaltkreises.

4. Stromversorgungskreis nach Anspruch 3, wobei der Schalterschaltkreis ein Thyristor, ein MOS-FET oder ein bipolarer Transistor ist.

5. Stromversorgungskreis nach Anspruch 3 oder 4, wobei der Schalterschaltkreis auf jeder Seite von positiven und negativen Seiten des Strompfades bereitgestellt wird.

6. Stromversorgungskreis nach einem der Ansprüche 3 bis 5, des Weiteren umfassend:
einen Unterbrechungs-Ermittlungsschaltkreis zur Ermittlung einer Unterbrechung des Strompfads, wobei
der Schalterschaltkreis nicht zwischen dem Strompfad und dem Unterbrechungs-Ermittlungsschaltkreis angeordnet ist.

7. Stromversorgungskreis nach einem der Ansprüche 1 bis 6, des Weiteren umfassend:
einen Spannungswandler; und
einen Kondensator, der elektrische Energie speichert, die von einer externen Spannungsquelle zugeführt wird, um einen Strom anstelle der externen Spannungsquelle zuzuführen, wenn die Zufuhr eines Stroms von der externen Spannungsquelle blockiert ist.

8. Insassenschutzsystem, umfassend:
eine elektronische Steuereinheit, die mit einer Spannungsquelle und einem Aufprallsensor verbunden ist; und
mehrere Modulgehäuse, die mit der elektronischen Steuereinheit verbunden sind, und in denen mehrere Gasgeneratoren und mehrere Airbags untergebracht sind, wobei die elektronische Steuereinheit und jede der individuellen Gasgeneratoren durch elektrische Leiter getrennt verbunden sind, wobei
die elektronische Steuereinheit den Stromversorgungskreis nach einem der Ansprüche 1 bis 7 umfasst.

9. Verfahren zur Zufuhr eines Zündimpulses, um einen elektrischen Zünder zu betätigen, der in einem Gasgenerator für einen Airbag angeordnet ist, wobei das Verfahren die nachstehenden Schritte umfasst:
Erhalten von Strom von einer externen Spannungsquelle; und
Zuführen eines Zündimpulses zur Betätigung des elektrischen Zünders;
**dadurch gekennzeichnet, dass**
die Breite des Zündimpulses 20 bis 500 µsec beträgt.

10. Verfahren zur Betätigung eines Zünders nach Anspruch 9, wobei die Breite des Zündimpulses 40 bis 100 µsec beträgt.

## Revendications

1. Circuit de fourniture de courant destiné à délivrer une impulsion d'allumage pour actionner un dispositif électrique d'allumage agencé dans un générateur de gaz à l'instant d'actionnement du générateur de gaz pour coussin gonflable de sécurité, comprenant :
un premier connecteur destiné à relier le circuit de fourniture de courant à une source d'énergie externe, et
un second connecteur destiné à relier le circuit de fourniture de courant au dispositif électrique d'allumage,
**caractérisé en ce que**
la largeur de l'impulsion d'allumage va de 20 µs à 500 µs.

2. Circuit de fourniture de courant selon la revendication 1, dans lequel la largeur de l'impulsion d'allumage va de 40 µs à 100 µs.

3. Circuit de fourniture de courant selon la revendication 1 ou la revendication 2, comprenant en outre :
un circuit de commutation destiné à ouvrir ou à fermer une ligne de courant pour actionner le dispositif d'allumage, le circuit de commutation étant utilisé entre la ligne de courant et une source d'énergie externe,
un générateur d'impulsions destiné à délivrer une impulsion de commande permettant d'ouvrir ou de fermer le circuit de commutation.

4. Circuit de fourniture de courant selon la revendication 3, dans lequel le circuit de commutation est un thyristor, un transistor MOSFET ou un transistor bipolaire.

5. Circuit de fourniture de courant selon la revendication 3 ou la revendication 4, dans lequel le circuit de commutation est prévu sur chaque côté des bords positif et négatif de la ligne de courant.

6. Circuit de fourniture de courant selon l'une quelconque des revendications 3 à 5, comprenant en outre :
un circuit de détection de déconnexion destiné à détecter une déconnexion de la ligne le courant, dans lequel
le circuit de commutation n'est pas interposé entre la ligne de courant et le circuit de détection de déconnexion.

7. Circuit de fourniture de courant selon l'une quelconque des revendications 1 à 6, comprenant en outre :
un transformateur de tension, et
un condensateur stockant de l'énergie électrique fournie par une source externe d'énergie pour délivrer un courant à la place de la source externe d'énergie lorsque la fourniture de courant en provenance de la source externe d'énergie est bloquée.

8. Système de coussin gonflable de sécurité comprenant :
une unité électronique de commande reliée à une source d'énergie, ainsi qu'un capteur de détection d'impact, et
plusieurs boîtiers de modules reliés à l'unité électronique de commande et accueillant plusieurs générateurs individuels de gaz reliés séparément par des conducteurs, où
l'unité électronique de commande comprend le circuit de fourniture de courant conforme à l'une quelconque des revendications 1 à 7.

9. Procédé de fourniture d'une impulsion d'allumage pour actionner un dispositif électrique d'allumage agencé dans un générateur de gaz destiné à un coussin gonflable de sécurité, le procédé comprenant les étapes suivantes :
la récupération de courant provenant d'une source externe d'énergie, et
la délivrance d'une impulsion d'allumage permettant actionner le dispositif électrique d'allumage,
**caractérisé en ce que**
la largeur de l'impulsion d'allumage va de 20 µs à 500 µs.

10. Procédé d'actionnement d'un dispositif d'allumage selon la revendication 9, dans lequel la largeur de l'impulsion d'allumage va de 40 µs à 100 µs.
